# EUROPÄISCHE PATENTANMELDUNG

(11) **EP 0 820 910 A2**
(43) Veröffentlichungstag der Anmeldung: **28.01.1998**
(21) Anmeldenummer: 97111648.8
(22) Anmeldetag: 09.07.1997
(51) Int. Cl.: B60R 22/46

(54) **Pyrotechnische Linearantriebseinrichtung für einen Gurtstraffer**

(30) Priorität: 23.07.1996 DE 29612781 U
(71) Anmelder: TRW Occupant Restraint Systems GmbH, 73551 Alfdorf (DE)
(72) Erfinder: Wier, Franz, 73571 Göggingen (DE)
(74) Vertreter: Kitzhofer, Thomas, Dipl.-Ing.

(57) **Zusammenfassung**

Eine pyrotechnische Linearantriebseinrichtung für einen Gurtstraffer, mit einer Kolben-Zylinder-Einheit, einem Gasgenerator (9), zum Antreiben des Kolbens und einer Zündeinheit (25) zum Auslösen einer Treibladung (13, 15) des Gasgenerators (9) ist dadurch gekennzeichnet, daß der Gasgenerator (9) als Mehrstufengasgenerator mit mehreren in seinem Inneren räumlich voneinander getrennten und getrennt einzeln oder gleichzeitig auslösbaren Treibladungen (13, 15) ausgebildet ist.

## Beschreibung

Die Erfindung betrifft eine pyrotechnische Linearantriebseinrichtung für einen Gurtstraffer, mit einer Kolben-Zylinder-Einheit, einem Gasgenerator zum Antreiben des Kolbens und einer Zündeinheit zum Auslösen einer Treibladung des Gasgenerators.

Bei herkömmlichen pyrotechnischen Linearantriebseinrichtungen ist die pyrotechnische Treibladung für Fahrzeuginsassen von durchschnittlichem Körpergewicht bemessen. Der Gurt wird deshalb bei kleinen, großen, leichten oder schweren Insassen mit gleicher Kraft strammgezogen. Durch eine optimale Gurtstraffung wird angestrebt, daß der Fahrzeuginsasse möglichst frühzeitig an der Fahrzeugverzögerung im Kollisionsfall teilnimmt. Dieses Ergebnis kann bei kleinen Personen von geringerem Körpergewicht aber bereits mit einer kleineren Straffkraft erreicht werden als bei Personen mit durchschnittlichem oder größerem Körpergewicht.

Durch die Erfindung wird eine pyrotechnische Linearantriebseinrichtung für einen Gurtstraffer geschaffen, deren Antriebsenergie in mehreren Stufen bereitgestellt wird, um in Abhängigkeit von Parametern wie der Körpergröße, des Körpergewichts, der Sitzposition oder der Aufprallintensität eine angepaßte, optimale Gurtstraffung zu gewährleisten. Dies wird bei einer pyrotechnischen Linearantriebseinrichtung der eingangs genannten Art erfindungsgemäß dadurch erreicht, daß der Gasgenerator als Mehrstufengasgenerator mit mehreren in seinem Inneren räumlich voneinander getrennten und getrennt einzeln oder gleichzeitig auslösbaren Treibladungen ausgebildet ist. Der Gasgenerator bildet eine Einheit für sich, in dem die Treibladungen getrennt voneinander angeordnet sind. Es müssen damit nicht mehrere Gasgeneratoren mit jeweils einer einzigen Treibladung in die Linearantriebseinrichtung eingebaut werden, was die Montage vereinfacht.

Vorzugsweise sind zwei Treibladungen mit unterschiedlichen Antriebsleistungen im Gasgenerator enthalten, so daß drei verschiedene Antriebsleistungen erzielbar sind, nämlich die jeder einzelnen Treibladung und, bei gleichzeitigem Auslösen beider Treibladungen die Summe der einzelnen Antriebsleistungen. Das Verhältnis der Antriebsleistungen steht dabei vorzugsweise im Verhältnis von etwa 1:2.

Der erfindungsgemäßen Linearantriebseinrichtung sind mindestens ein Sensor zur Ermittlung von fahrzeuginsassen-, fahrzeug- oder fahrzeugumgebungsspezifischen Parametern und ein damit verbundenes Auslösegerät zugeordnet, das in Abhängigkeit von den ermittelten Parametern die Auslösung von einer oder mehreren Treibladungen steuert. Die Parameter, die ermittelt werden können, sind dabei z.B. Sitzbelegung, Körpergewicht, Körpergröße oder Sitzposition des Fahrzeuginsassen sowie Aufprallintensität, Fahrzeuginnen- oder Außentemperatur. Das Einbeziehen der beiden letzten Parameter in die Bestimmung der zu erzeugenden Antriebsleistung hat dabei folgenden Hintergrund: Bei niedrigen Außentemperaturen und niedrigen Temperaturen im Fahrzeuginneren, z.B. im Winter, ist davon auszugehen, daß ein Fahrzeuginsasse dickere Kleidung trägt, so daß ein Sicherheitsgurt nicht eng am Körper des Fahrzeuginsassen anliegt und sich der Fahrzeuginsasse im Kollisionsfall aufgrund der dicken, nachgiebigen Kleidung weit bewegen muß, bis er vom Sicherheitsgurt zurückgehalten wird. Ein Gurtstraffer muß in einem solchen Fall eine größere Antriebsleistung haben, um den Sicherheitsgurt schnell an den Körper des Insassen anzudrücken.

Bei der bevorzugten Ausführungsform ist der Gasgenerator ein kreisringförmiger Körper, der im Inneren des Zylinders an die Zylinderwandung angrenzt, wobei im Inneren des Gasgenerators eine Trennwand zwischen den Treibladungen vorgesehen ist, die insgesamt axial verläuft. Jede Treibladung ist durch eine stirnseitige Abdeckung zum Arbeitsraum abgetrennt und gegen Auslösen beim Zünden der anderen Treibladung geschützt.

Weitere Merkmale und Vorteile der Erfindung ergeben sich aus der folgenden Beschreibung von bevorzugten Ausführungsformen und aus den Zeichnungen, auf die Bezug genommen wird. In den Zeichnungen zeigen:
- Fig. 1 eine Längsschnittansicht durch eine erste Ausführungsform der erfindungsgemäßen Linearantriebseinrichtung, mit einem im Inneren des Zylinders angeordneten Gasgenerator mit zwei Treibladungen, die über eine gemeinsame Zündeinheit auslösbar sind;
- Fig. 2 eine entsprechende Ansicht einer zweiten Ausführungsform der erfindungsgemäßen Linearantriebseinrichtung, bei der die von zwei Treibladungen gefüllten Räume im Inneren des Gasgenerators jedoch eine andere Geometrie aufweisen als bei der in Fig. 1 gezeigten Ausführungsform;
- Fig. 3 eine entsprechende Ansicht einer dritten Ausführungsform der erfindungsgemäßen Linearantriebseinrichtung, mit einer gegenüber der in Fig. 1 gezeigten, modifizierten Zündeinheit; und
- Fig. 4 eine vierte Ausführungsform der erfindungsgemäßen Linearantriebseinrichtung mit zwei getrennten Zündeinheiten für die Treibladungen.

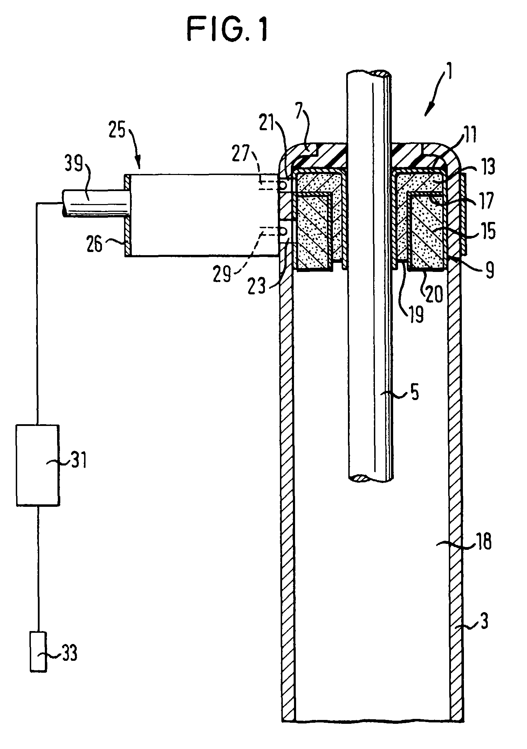

In Fig. 1 ist eine pyrotechnische Linearantriebseinrichtung 1 für einen Gurtstraffer gezeigt, die eine Einheit aus einem (nicht gezeigten) antreibbaren Kolben und einem Zylinder 3 aufweist. Eine Kolbenstange 5 erstreckt sich vom Kolben durch eine Öffnung an der Stirnseite 7 des Zylinders 3 hindurch nach außen, wo sie mit einer Einrichtung zum Erfassen des Sicherheitsgurtes verbunden ist. Im Inneren des Zylinders 3, an die Stirnseite 7 angrenzend, ist ein kreisringförmiger, die Kolbenstange 5 umgebender Gasgenerator 9 vorgesehen. Dieser umfaßt ein dünnes, kreisringförmiges Gehäuse 11. Im Inneren des Gasgenerators 9 sind zwei räumlich voneinander getrennte Treibladungen, nämlich eine erste Treibladung 13 und eine zweite Treibladung 15 vorgesehen. Die Antriebsleistungen der beiden Treibladungen 13, 15 stehen im Verhältnis von etwa 1:2. Die beiden Treibladungen 13, 15 werden durch eine rotationssymmetrische, im Querschnitt L-förmige Wand 17 voneinander getrennt. Die Trennwand 17 ist so angeordnet, daß beide Treibladungen 13, 15 mit einem Arbeitsraum 18 im Inneren des Zylinders 3 in Verbindung stehen. Jede Treibladung 13, 15 ist im nicht betätigten Zustand der Linearantriebseinrichtung 1 jedoch durch eine stirnseitige Abdeckung 19, 20 zum Arbeitsraum 18 hin abgetrennt.

Zwei Durchgangsöffnungen 21, 23 an der Mantelfläche des Zylinders 3 stehen mit jeweils einer Treibladung 13 bzw. 15 in Verbindung, wobei das Gehäuse 11 des Gasgenerators 9 im Bereich der Durchgangsöffnungen 21, 23 ausgespart ist. Eine gemeinsame Zündeinheit 25 ist durch einen Spannring 26 an der Mantelfläche des Zylinders 3 befestigt, und sich aus der Zündeinheit 25 heraus erstreckende Zündpillen 27 und 29 ragen teilweise in die Durchgangsöffnungen 21 bzw. 23.

Die Zündeinheit 25 ist über ein Kabel 39 an ein elektronisches Auslösegerät 31 angeschlossen, an welches wiederum mehrere Sensoren angeschlossen sind, von denen nur ein Sensor 33 dargestellt ist. Dabei sind ein Crash-Sensor, ein Sensor zur Ermittlung der Aufprallintensität, ein Sensor zur Bestimmung der Sitzbelegung, ein Sensor zur Ermittlung des Körpergewichts eines Fahrzeuginsassen und ein Sensor zur Ermittlung der Außentemperatur vorgesehen.

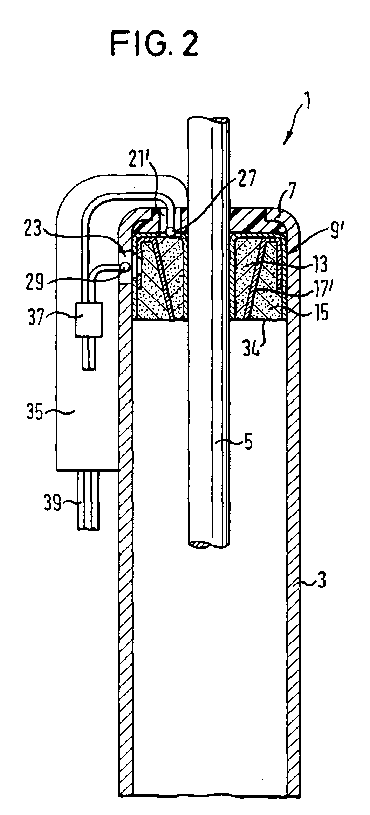

Die bei den Ausführungsformen nach den Fign. 2 bis 4 vorhandenen Auslösegeräte 31 und Sensoren 33 sind nicht mehr dargestellt.

Bei der in Fig. 2 dargestellten Ausführungsform ist der Gasgenerator 9' gegenüber dem in Fig. 1 dargestellten Gasgenerator 9 geringfügig modifiziert, indem die Trennwand 17' innerhalb des Gasgenerators 9' zum Kolben hin konisch zuläuft. Die in Fig. 1 gezeigten beiden Abdeckungen 19, 20 sind zu einer gemeinsamen Abdeckung 34 zusammengefaßt. Ferner ist die Durchgangsöffnung 21' an der Stirnseite 7 und die Durchgangsöffnung 23 weiterhin an der Mantelfläche des Zylinders 3 vorgesehen, weshalb sich die gemeinsame Zündeinheit 35 bis zur Stirnseite 7 erstreckt. Das mehradrige, mit dem Auslösegerät 31 verbundene Kabel 39 erstreckt sich in das Innere der Zündeinheit 35 und ist mit einer Hochfrequenzdrossel 37 verbunden, nach der sich das Kabel 39 aufzweigt und einzelne Adern zu den Zündpillen 27, 29 führen. Die gemeinsame Hochfrequenzdrossel 37 ist in der gemeinsamen Masseleitung der Zündpillen 27, 29 angeordnet.

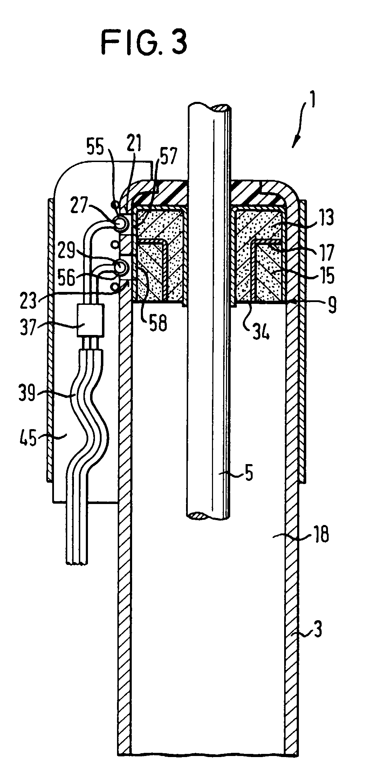

Die in Fig. 3 dargestellte Ausführungsform unterscheidet sich von der in Fig. 1 gezeigten darin, daß die Zündeinheit 45 ähnlich wie die in Fig. 2 gezeigte Zündeinheit 35 als langgestreckter, sich an die Mantelfläche des Zylinders 3 anschmiegender Körper ausgebildet ist und nicht seitlich wie in Fig. 1 deutlich von ihr absteht. Beide Durchgangsöffnungen 21, 23 sind jedoch, wie bei der in Fig. 1 gezeigten Ausführungsform, in der Mantelfläche des Zylinders 3 vorgesehen. Das Gehäuse 11 ist in den Bereichen 57, 58 der Durchgangsöffnungen 21, 23 geschlossen, jedoch z.B. durch eine Ringnut oder durch eine Perforation geschwächt, um das Durchbrechen des Gehäuses 11 beim Zünden zu erleichtern. Ferner ist jede Zündpille 27, 29 von einem die Zündung verstärkenden Mantel 55, 56 aus pyrotechnischem Material umgeben, der in der in Fig. 3 gezeigten Ausführungsform in die entsprechende Durchgangsöffnung 21, 23 ragt.

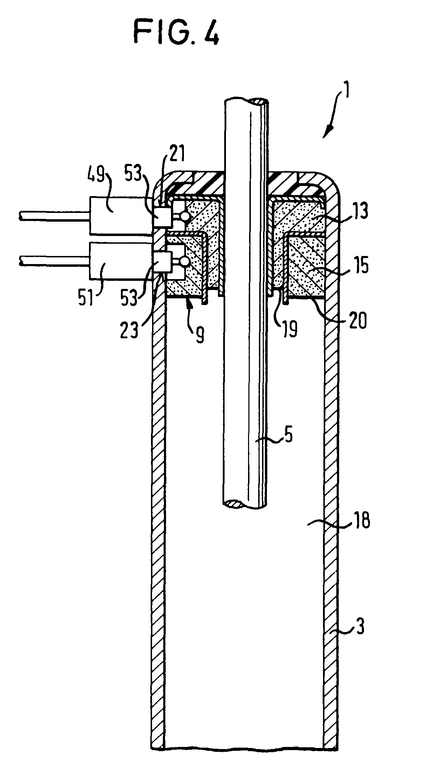

Bei der in Fig. 4 dargestellten Ausführungsform der Linearantriebseinrichtung 1 ist jeder Treibladung 13, 15 eine eigene Zündeinheit 49 bzw. 51 zugeordnet, wobei die Zündeinheiten 49, 51 jeweils als Steckverbindung ausgebildet sind, indem sie mit einem im Querschnitt kleinerem Fortsatz 53 in entsprechend größer ausgebildete Durchgangsöffnungen 21, 23 an der Mantelfläche des Zylinders 3 mit Preßsitz gesteckt werden.

Die Funktionsweise der Linearantriebseinrichtung 1 wird anhand von Fig. 1 im folgenden erläutert. Im Kollsionsfall des Fahrzeugs wird über einen Crash-Sensor ein entsprechendes Signal dem Auslösegerät 31 zugeführt. Dieses initiiert, abhängig davon, ob ein Sitz belegt ist oder nicht, und steuert, abhängig vom Körpergewicht des Fahrzeuginsassen, der Körpergröße und der Sitzposition die Auslösung einer oder beider Treibladungen 13, 15 über die Zündeinheit 25. Wird über die Sensoren ermittelt, daß die Linearantriebseinrichtung 1 für einen kleinen, leichten Fahrzeuginsassen ausgelöst werden soll, wird nur die erste Treibladung 13 durch die Zündpille 27 ausgelöst, und Gas strömt in den Arbeitsraum 18. Dabei wird die Abdeckung 19 durchschlagen. Die stirnseitige, durch den Gasdruck nicht zerstörte Abdeckung 20 verhindert, daß durch die gezündete Treibladung 13 die nicht zu zündende Treibladung 15 ausgelöst wird. Im Falle des Zündens nur einer Treibladung bei den in den Fign. 2 und 3 gezeigten Ausführungsformen wird nur der Bereich der Abdeckung 34 zerstört, der der ausgelösten Treibladung zugeordnet ist.

Wenn ein Fahrzeuginsasse mit durchschnittlicher Konstitution vorhanden ist, wird nur die zweite Treibladung 15 gezündet. Bei schweren, großen Fahrzeuginsassen, vor allem dann, wenn die Außentemperatur sehr niedrig sind, ist eine höhere Antriebsleistung der Linearantriebseinrichtung 1 erforderlich, so daß im Kollisionsfall beide Treibladungen 13, 15 unabhängig voneinander, jedoch gleichzeitig ausgelöst werden.

## Patentansprüche

1. Pyrotechnische Linearantriebseinrichtung für einen Gurtstraffer, mit einer Kolben-Zylinder-Einheit, einem Gasgenerator (9; 9'), zum Antreiben des Kolbens und einer Zündeinheit (25; 35; 45; 49, 51) zum Auslösen einer Treibladung (13, 15) des Gasgenerators (9; 9'), dadurch gekennzeichnet, daß der Gasgenerator (9; 9') als Mehrstufengasgenerator mit mehreren in seinem Inneren räumlich voneinander getrennten und getrennt einzeln oder gleichzeitig auslösbaren Treibladungen (13, 15) ausgebildet ist.

2. Linearantriebseinrichtung nach Anspruch 1, dadurch gekennzeichnet, daß ihr zumindest ein Sensor (33) zur Ermittlung von fahrzeuginsassen-, fahrzeug- oder fahrzeugumgebungsspezifischen Parametern sowie ein damit verbundenes Auslösegerät (31) zugeordnet sind, das in Abhängigkeit von den ermittelten Parametern die Auslösung von einer oder mehreren Treibladungen (13, 15) steuert.

3. Linearantriebseinrichtung nach Anspruch 1 oder 2, dadurch gekennzeichnet, daß Sensoren zur Ermittlung von einem oder mehreren der folgenden Parameter vorgesehen sind:
Sitzbelegung,
Körpergewicht des Fahrzeuginsassen,
Körpergröße des Fahrzeuginsassen,
Sitzposition des Fahrzeuginsassen im Fahrzeug,
Aufprallintensität,
Fahrzeuginnenraumtemperatur und
Außentemperatur.

4. Linearantriebseinrichtung nach einem der vorstehenden Ansprüche, dadurch gekennzeichnet, daß die Treibladungen (13, 15) unterschiedliche Antriebsleistungen haben.

5. Linearantriebseinrichtung nach einem der vorstehenden Ansprüche, gekennzeichnet durch eine gemeinsame Zündeinheit (25; 35; 45) für die Treibladungen (13, 15) mit jeweils einer, einem Treibsatz (13, 15) zugeordneten Zündpille (27, 29).

6. Linearantriebseinrichtung nach Anspruch 5, dadurch gekennzeichnet, daß jede Zündpille (27, 29) von einem die Zündung verstärkenden Mantel (55, 56) aus pyrotechnischem Material umgeben ist.

7. Linearantriebseinrichtung nach Anspruch 5 oder 6, dadurch gekennzeichnet, daß ein gemeinsames, sich in die Zündeinheit (25; 35; 45) erstreckendes Kabel (39) und eine gemeinsame, in die Zündeinheit (25) integrierte Hochfrequenzdrossel (37) für sämtliche Zündpillen (27, 29) vorgesehen sind, wobei sich Adern des Kabels (39) nach der Hochfrequenzdrossel (37) zu den einzelnen Zündpillen (27, 29) aufzweigen und die Hochfrequenzdrossel (37) in der gemeinsamen Masseleitung der Zündpillen (27, 29) angeordnet ist.

8. Linearantriebseinrichtung nach einem der vorstehenden Ansprüche, dadurch gekennzeichnet, daß die mindestens eine Zündeinheit (49, 51) zu ihrer Befestigung eine Steckverbindung aufweist oder Teil einer Steckverbindung ist.

9. Linearantriebseinrichtung nach einem der vorstehenden Ansprüche, dadurch gekennzeichnet, daß der Gasgenerator (9; 9') ein kreisringförmiger Körper ist, der im Inneren des Zylinders (3) an die Zylinderwandung angrenzt, wobei im Inneren des Gasgenerators (9; 9') eine Trennwand (17; 17') zwischen den Treibladungen (13, 15) vorgesehen ist, die insgesamt axial verläuft.

10. Linearantriebseinrichtung nach Anspruch 9, dadurch gekennzeichnet, daß die Treibladungen (13, 15) koaxiale, kreisringförmige Räume im Gasgenerator (9; 9') ausfüllen, die jeweils in den Arbeitsraum (18) im Inneren des Zylinders (3) münden, wobei im nicht ausgelösten Zustand jede Treibladung (13, 15) durch eine stirnseitige Abdeckung (19, 20) zum Arbeitsraum (18) hin abgetrennt und gegen Auslösen beim Zünden einer anderen Treibladung (13, 15) geschützt ist.

11. Linearantriebseinrichtung nach Anspruch 9 oder 10, dadurch gekennzeichnet, daß das Gehäuse (11) des Gasgenerators (9) im Bereich (57, 58) von den Zündpillen (27, 29) gegenüberliegenden Durchgangsöffnungen (21, 23) in der Zylinderwandung jeweils geschwächt ist, um das Durchbrechen des Gehäuses (11) beim Zünden der entsprechenden Treibladung (13, 15) zu erleichtern.
